# EUROPEAN PATENT SPECIFICATION

(11) **EP 0 346 101 B1**
(45) Date of publication and mention of the grant of the patent: **27.12.1995**
(21) Application number: 89305756.2
(22) Date of filing: 07.06.1989
(51) Int. Cl.: C09D 143/04

(54) **Plastic coated steel tube**
Mit Kunststoff beschichtetes Stahlrohr
Tube en acier revêtu d'une résine synthétique

(30) Priority: 07.06.1988 FI 882691
(43) Date of publication of application: 13.12.1989
(73) Proprietor: NESTE OY, SF-02151 Espoo (FI)
(72) Inventor: Bergstrom, Christer, SF-02170 Espoo (FI); Von Knorring, Johan, SF-02170 Espoo (FI); Karttunen, Mikko, SF-06100 Porvoo (FI)
(74) Representative: Lamb, John Baxter

(56) References cited:
- EP-A- 0 101 091
- GB-A- 2 181 437
- WORLD PATENTS INDEX LATEST, Week 8129, Derwent Publications Ltd., London, GB; AN 81-52687D; & JP-A-56 065 667
- WORLD PATENTS INDEX LATEST, Week 8811, Derwent Publications Ltd., London, GB; AN 88-073824; & JP-A-63 027 248

## Description

The present invention concerns a plastic coated steel tube, comprising one plastic layer containing hydrolysable silane. The purpose of said silane containing layer is to bond the plastic coating onto steel or epoxy-coated steel. Moreover, the silane-containing plastic layer is cross-linked, which improves its mechanical and thermal properties.

Plastic coated steel tubes have heretofore been produced e.g. for transporting natural gas, the steel tube being first shot blasted and cleaned and thereafter heated with a gas flame or in an induction furnace to 90 to 230^{o}C, to be thereafter coated with a black polyethylene compound and with a hot melt or an ethylene polymer containing acid (the acid may be doped or copolymerized) for adhesion layer.

This two-layer coating process may be carried out in that both layers are coextruded or tandem-extruded, the tube being passed through the die (crosshead coating) or so that the tube rotates at the same time while a film of molten plastic is extruded thereupon (spiral coating). It is also common to apply the adhesion layer on the tube by powder coating. It is important, in any case, that the adhesion between plastic and steel is good enough to exclude entry of moisture to corrode the steel. Polyolefin pipe coatings are also disclosed in JP-A-56065667.

Recently, epoxy has also been introduced for corrosion protection of steel tubes because epoxy is highly adhesive to steel. On the other hand, epoxy is rather sensitive to impacts and therefore an epoxy-coated steel tube is usually furthermore coated with a black polyethylene compound and with an acid-containing ethylene polymer as an adhesion layer. This three-layer coating (MAPEC technique) is accomplished in principle in the same way as a two-layer coating, with the exception that epoxy is coated as powder or liquid immediately before the adhesion layer coating. The coating with these layers has to be very closely controlled. The epoxy must not be too little cured (too low temperature or too short time), nor too much cured (too high temperature or too long time) when the adhesion layer is applied, in order to obtain the desired adhesion (the requirements are considerably higher than for two-layer coating).

In addition, the temperature of the adhesion plastic must be high enough (over 210^{o}C).

Said three-layer coating has been introduced on the basis of the increasing demands imposed in various countries. In addition to increased requirements concerning the level of adhesion requirements are also imposed on ageing strength, adhesion at low or high temperatures, etc. These demands are standardized in various countries. The adhesion plastics for two-layer coating and three-layer coating of steel tubes currently available on the market are based on polyethylene and polypropylene, or on their copolymers grafted with low contents (less than 1%) of unsaturated acid (e.g. maleic acid anhydride) or ethylene copolymers or terpolymers containing high amounts (over 4%) of unsaturated acid (e.g. acrylic acid or maleic acid anhydride).

Said traditional adhesion plastics are aggressive in the extrusion process, and they require well-controlled conditions when coating on steel or epoxy. Moreover, these adhesion plastics usually melt at fairly low temperature (not thermally stable), and they are not crosslinkable.

Silanes are traditionally used on monomers when producing silicones, and as so-called coupling agents in order to improve the adhesion between e.g. fillers, glass fibre and plastics.

In plastics industry, also silane-grafted polyolefins or ethylene-silane copolymers or terpolymers are used for cross-linking under the influence of a silanol condensation catalyst and water. Silane-grafted polyolefins and ethylene-silane copolymers or terpolymers also present good adhesion to metals, such as steel and aluminium, as well as to polar plastics, such as polyamide, polyester, etc., and the adhesion can be improved by blending in organic acids or aminosilanes. Coating compositions containing hydrolysable silanes are disclosed in EP-A-0101091.

According to the invention there is provided a steel tube or an epoxy layer coated steel tube, further coated with inner and outer polyolefin layers, whereby the inner layer is between the steel tube and the outer layer, characterized in that the outer polyolefin layer comprises a polyolefin compound containing carbon black and the inner polyolefin layer consists of a polyolefin which has been grafted or polymerised with 0.1-5 wt.% of a hyrolyzable silane, which, under the influence of water, forms silanol groups.

The inner layer consists of a polyolefin which has been grafted or copolymerized with a hydrolysable silane, which induces improved adhesion to steel in two-layer coating, and to epoxy in three-layer coating of steel tubes. Grafting with hydrolysable silane may take place by means of a radical reaction in which a polymer radical is formed, which then in turn may react with an unsaturated group in the silane. This reaction mechanism may be caused e.g. in that a peroxide initiator forms radicals at elevated temperature and said radicals cleave off hydrogen from the polyolefin chains. Also other types of radical initiators are encountered, and it is moreover possible to obtain polymer radicals by means of irradiation (e.g. EB). Hydrolysable silanes may also be grafted to polyolefin chains in another way, in that a functional group in the silane (e.g. an amino group) reacts with a functional group in the polyolefin (e.g. butyl acrylate). When a hydrolysable silane is to be copolymerized or terpolymerized with an olefin, the silane must in contrast always contain an unsaturated group. Hydrolysable silane is an organic silicon compound which under influence of water forms silanol groups. In general, it is alkoxy groups (mostly methoxy groups) which are hydrolyzed in this way but also acetoxy and chloride groups may be considered. The most commonly encountered hydrolysable silane for cross-linking polymers is vinyl-trimethoxysilane (VTMO), but also vinyl-triethoxysilane (VTEO), vinyl-tris-methoxy-ethoxysilane (VTMOEO) and methacryloxy-propyl-trimethoxysilane (MEMO) are common. In addition, also mono- and dialkoxy silanes are available, as well as vinyl-methyl-dimethoxy silane (VMDMO).

As a base polymer for grafting hydrolysable silane any polyolefin may be used in principle, but the most common ones are polyethylene (LDPE, HDPE, LMDPE, LLDPE, VLDPE and ULDPE), various ethylene copolymers (EVA, EBA, EEA, EMA) and polypropylene (PP) and its copolymers. Regarding copolymers or terpolymers with unsaturated hydrolysable silane as comonomer, the most common polymers are E - VTMO, E - BA - VTMO, E - MA - VTMO and E - MEMO which have been produced by high-pressure polymerization. The content of hydrolysable silane in silane containing polyolefin layers in plastic-coated steel tubes is 0.1 to 5% by weight, but preferably 0.5 to 3% by weight.

The silane containing layer is cross-linked by influence of water in that the silane is first hydrolyzed with formation of silanol groups, and they condense thereafter to form siloxan bridges. The reaction takes place slowly in storage and during service of the tube because the polyethylene compound takes up moisture from the environment. a layer containing higher amounts of water may also be used or a layer which through a chemical reaction splits off water. The cross-linking process may also be effected of higher speed by heating the plastic-coated steel tube and by using a so-called silanol condensation catalyst, such as e.g. dibutyl tin dilaurate. This silanol condensation catalyst is usually added as a master batch at extrusion of the silane containing layer, but it may also be added to the outer layer which usually consists of black polyethylene compound, or to the epoxy layer, or to another layer which is part of the plastics coating. If the silane condensation catalyst is included in a layer other than the silane containing layer, extrusion will be easier to perform because gelformation is less likely to occur, resulting in clumping. In contrast, the silanol condensation catalyst diffuses after extrusion readily into the silane containing layer from the layer containing silanol condensation catalyst. It is obvious that the catalyst may also be applied by spraying or brushing on the silane containing layer, in connection with the coating or a separate treatment. The silanol condensation catalyst is added in such amount that after equilibrium one obtains 0.01 to 0.5% in the silane containing layer.

In order to illustrate more closely the invention here disclosed, the following, non-limiting examples are presented.

Spiral coating of steel tubes using two-layer technique and three-layer technique was simulated by coating a steel plate which moved horizontally on a track of rotating rolls. The 8 mm thick sand-blasted and cleaned steel plates were heated in an electric oven to temperature T_{fe} and transported through the coating line. Thereafter, a 80 »m layer of powder epoxy (Bitumes Speciaux' Eurokote 714.31) was applied by spraying (only in three-layer coating), and after an intercoating time tᵢₙₜ the plate was extrusion-coated with a S_{ad} thick layer of adhesion plastic having the temperature T_{Ad}, and immediately thereafter a 1.5 mm thick layer of black polyethylene compound (Neste A 3522-CJ, melt index 0.35 g/10 min and carbon black content 2.5%) having the temperature 220^{o}C.

After the coating, the plastic layer was pressed against the steel plate with a roll at the pressure 2 kg/cm², and the plastic-coated steel plate was cooled with water during 1 min. After at least 24 hrs the adhesion was determined using a 90^{o} peel testing with pulling rate 50 mm/min. Said testing was carried out at 23^{o}C and 60^{o}C. Moreover, the adhesion at 23^{o}C and 60^{o}C was also measured after the plastic-coated steel plate had been cross-linked in 80^{o}C water for 12 hrs.

In Example 1 is seen how silane-containing ethylene polymers adhere to steel in two-layer coating. The temperature T_{Fe} of the steel was 210^{o}C, the temperature T_{Ad} of the adhesion plastic 220^{o}C, and the thickness S_{Ad} of the adhesion layer, 300 »m.

For reference, and acid-grafted adhesion plastic (Neste AC 0444) was used, as well as an E - BA - AA - terpolymer (Lupolen 2910M by BASF), and an LDPE (Neste B 4524, melt index 4.5 g/10 min with density 924 kg/m³).

### Example 1

| Adhesions plastic | | Adhesion (N/cm) | |
|---|---|---|---|
| Type | | 23 ^{o}C | 60 ^{o}C |
| E - VTMO | MI = 0.7 g/10 min | 20.4 | 17.6 |
| | VTMO = 1.7% | | |
| E - BA - VTMO | MI = 4.5 g/10 min | 41.7 | 19.2 |
| | BA = 17% | | |
| | VTMO = 2% | | |
| E - MEMO | MI = 1.5 g/10 min | 36.2 | 22.3 |
| | MEMO = 1.3% | | |
| VTMO - grafted LDPE | MI = 0.7 g/10 min | 32.4 | 18.1 |
| | VTMO = 1.7% | | |
| Acid grafted adhesion plastic | | 36.9 | 19.6 |
| E - BA - AA | | 34.8 | 21.3 |
| LDPE | | 0 | 0 |

The above results reveal that LDPE fails totally to adhere to steel at all, and that using silane-containing ethylene polymers adhesion values can be obtained which are on the same level as those of the acid containing commercial adhesion plastic grades.

Among the silane containing ethylene polymers, E - BA - VTMO - terpolymer proved to be the best one. At elevated testing temperature (160^{o}C), however, all said polymers show insufficient adhesion.

Example 2 shows how the silane-containing ethylene polymers mentioned in Example 1 adhere to epoxy in three-layer coating. The same temperatures were used for the steel, adhesion plastic and black polyethylene compound as in Example 1. Two different intercoating times, 10 s and 20 s, were applied between epoxy coating and adhesion plastic coating.

### Example 2

| Adhesion plastic | Adhesion (N/cm) | | |
|---|---|---|---|
| | 23 ^{o}C | | 60 ^{o}C |
| Types | 10 s | 20 s | 20 s |
| E - VTMO | 27.1 | 30.0 | 21.3 |
| E - BA - VTMO | 125.1 | 167.0 | 38.2 |
| E - MEMO | 48.2 | 52.6 | 36.5 |
| VTMO - grafted LDPE | 35.6 | 47.8 | 19.7 |
| Acid grafted adhesion plastic | 163.1 | 63.0 | 18.2 |
| E - BA - AA | 31.4 | 62.8 | 29.6 |
| LDPE | 0 | 0 | 0 |

The above results reveal that LDPE fails totally to adhere in the epoxy and that using silane containing ethylene polymers, adhesion values can be achieved which are on a higher level that those of the acid containing commercial adhesion plastic grades. Of the silane-containing ethylene polymers, E - BA -VTMO - terpolymer proved to be overwhelmingly superior, and high adhesion values were measured both with short and long intercoating times. At elevated testing temperature (60^{o}C), however, all these polymers displayed insufficient adhesion.

In Example 3 it is seen how different coating conditions effect the adhesion at room temperature after a two-layer coating with E - BA - VTMO, with acid-grafted adhesion plastic and with E - BA - AA or adhesion layer. Those conditions which did not vary are the same as in Example 1.

### Example 3

| Variation of conditions | | Adhesion (N/cm) | |
|---|---|---|---|
| | E - BA -VTMO | Acid grafted adhesion plastic | E - BA - AA |
| T_{Fe} = 150 ^{o}C | 32.5 | 15.9 | 26.9 |
| = 185 ^{o}C | 39.2 | 22.6 | 31.4 |
| = 210 ^{o}C | 41.7 | 36.9 | 34.8 |
| = 225 ^{o}C | 51.2 | 33.1 | 47.6 |
| T_{Ad} = 150 ^{o}C | 52.2 | 29.3 | 27.0 |
| = 170 ^{o}C | 48.3 | 33.4 | 31.7 |
| = 220 ^{o}C | 41.7 | 36.9 | 34.8 |
| = 240 ^{o}C | 42.2 | 37.4 | 35.2 |
| S_{Ad} = 200 »m | 37.9 | 27.1 | 25.7 |
| = 300 »m | 41.7 | 36.9 | 34.8 |
| = 400 »m | 48.2 | 38.6 | 39.6 |

The above results reveal that E - BA - VTMO terpolymer presents the advantages that it is possible to use a lower temperature of the steel and of the adhesion plastic, and a thinner adhesion layer to achieve equivalent adhesion as with the acid-containing commercial adhesion plastics. All this results in reduced expenses. When a lower temperature can be maintained during the extrusion of the adhesion plastic, the operation also becomes more reliable with less thermal decomposition in the extruder and fewer production breaks.

In Example 4 it is seen how different coating conditions affect the adhesion at room temperature after a three-layer coating with E - BA - VTMO, with acid-grafted adhesion plastic and with E - BA - AA used or adhesion layer. Those conditions which have not been varied are the same as in Example 1, the intercoating time being 20 s.

### Example 4

| Variation of conditions | Adhesion (N/cm) | | |
|---|---|---|---|
| | E-BA-VTMO adhesion plastic | Acid grafted | E-BA-AA |
| T_{Fe} = 210 ^{o}C | 167.0 | 63.0 | 62.8 |
| = 220 ^{o}C | 157.9 | 53.1 | 52.2 |
| = 240 ^{o}C | 163.1 | 55.7 | 56.1 |
| T_{Ad} = 150 ^{o}C | 158.3 | 32.6 | 29.2 |
| = 170 ^{o}C | 169.2 | 47.8 | 45.3 |
| = 220 ^{o}C | 167.0 | 63.0 | 62.8 |
| = 240 ^{o}C | 153.7 | 67.3 | 69.1 |
| S_{Ad} = 200 »m | 113.2 | 42.7 | 37.2 |
| = 300 »m | 167.0 | 63.0 | 62.8 |
| = 400 »m | 169.3 | 62.4 | 67.1 |
| t_{Int} = 5 s | 117.8 | 38.2 | 26.7 |
| = 10 s | 125.1 | 163.1 | 31.4 |
| = 20 s | 167.0 | 63.0 | 62.8 |
| = 30 s | 148.2 | 23.4 | 21.8 |

The above results reveal that the E - BA - VTMO terpolymer has in principle the same advantages in three-layer coating as in two-layer coating (Example 3). The temperature of the steel plates could no doubt be lowered further, provided that powder epoxy is used which melts at lower temperature, or a liquid epoxy E - BA - VTMO can also be extruded at very low temperatures, which causes better reliability in operation. It was to be noted that the E - BA - VTMO terpolymer gives very good adhesion values both with very short intercoating times (non-cross-linked epoxy) and with very long intercoating times (completely cross-linked epoxy). This causes that adhesion in a three-layer coating is quite independent of the coating technique and equipment, of variations in the process conditions; this is a remarkable advantage.

In Example 5 it is seen how two-layer coated and three-layer coated steel tubes with a silane-containing adhesion layer can be cross-linked with the aid of water and the silanol condensation catalysts dibutyl tin dilaurate (DBTDL) and dioctyl tin dilaurate (DOTDL). In three-layer coating, the intercoating time was 20 s. The catalyst was added in the form of a 1% master batch on one hand into the adhesion plastics and, on the other hand, to the black polyethylene compound so that after equilibrium by effect of migration between the different plastics layers 0.05% of catalyst was obtained in the adhesion layer. Thereafter, the plastic-coated steel plates were kept in 80^{o}C water for 12 hrs in order to produce cross-linking. The degree of cross-linking expressed as per cent of polymer insoluble in 140^{o}C xylene within 8 h, was determined and the adhesion at 23^{o}C and 60^{o}C was measured.

### Example 5

| Cross-linked silane containing polymer | Degree of cross-linking (%) | Adhesion (N/cm) | | | |
|---|---|---|---|---|---|
| | | To steel | | To epoxy | |
| | | 23^{o}C | 60^{o}C | 23^{o}C | 60^{o}C |
| VTMO - grafted LDPE, DBTDL adhesion plastic | 67 | 27.1 | 25.2 | 39.7 | 32.8 |
| VTMO - grafted LDPE, DOTDL adhesion plastic | 62 | 25.3 | 23.0 | 36.8 | 27.1 |
| VTMO - grafted LDPE, DBTDL i den black polyethylene compound | 65 | 31.5 | 28.3 | 46.3 | 42.1 |
| E - BA - VTMO, DBTDL in the adhesion plastic | 78 | 36.3 | 25.1 | 87.4 | 63.1 |
| E - BA - VTMO, DBTDL in the black polyethylene compound | 76 | 38.9 | 35.7 | 161.5 | 74.2 |

The above results reveal that the adhesion to steel as well as to epoxy at 23^{o}C is somewhat poorer in the case of cross-linked adhesion plastics in comparison with the non-cross-linked adhesion plastic (Example 1 and 2). At 60^{o}C, in contrast, the adhesion of cross-linked adhesion plastic is clearly better. The best adhesion is obtained with E - BA -VTMO terpolymer and DBTDL, added to the black polyethylene compound.

In order to describe further the adhesion between silane-containing polymer and epoxy in the case of various base polymers, silanes and epoxy types, Example 6 was accomplished. This laboratory method implied that sand-blasted steel plates were heated to 210^{o}C in the case of powdered epoxy and 180^{o}C for liquid epoxy (Bitumes Speciaux' Enodokote 427,31). Thereafter, the hot steel plates were coated with a 80 »m layer of epoxy and a 300 »m layer of powdered adhesion plastic. The powdered epoxy and the adhesion plastic were coated by airborne spraying and the liquid epoxy with brush. When silanol condensation catalyst (DOTDL) was used, it was mixed with the liquid epoxy. The intercoating time was 5 s for powdered epoxy and 60 s for liquid epoxy. Subsequent to the coating with adhesion plastic, hot (210^{o}C) steel cylinders (D=20 mm) were attached on the adhesion plastic and the coated steel plates were than cooled after 120 s by dipping them in water. At least 24 hrs later, adhesion was tested by slowly pulling out the cylinders welded to the adhesion plastic, after making a cut through the plastic around them (ISO4624 method). In this instance, the adhesion was calculated as force per unit surface area under the steel cylinder, and this is expressed in N/cm².

In the present example, EBA stands for DFDS 6417 by Neste, HDPE for DMDS 0935 by Neste, LLDPE for DFDS 9020 by Neste and VLDPE for Mitsui Petrochemicals' Tafmer A 4085.

### Example 6

| Test | Adhesion (N/cm²) | |
|---|---|---|
| | Powdered epoxy | Liquid epoxy |
| LDPE | 0 | 0 |
| LDPE grafted with 0.1% VTMO | 10 | |
| LDPE grafted with 0.3% VTMO | 52 | |
| LDPE grafted with 1.0% VTMO | 85 | |
| LDPE grafted with 2.0% VTMO | 120 | 18 |
| LDPE grafted with 5.0% VTMO | 113 | |
| LDPE grafted with 2.0% VTEO | 36 | |
| LDPE grafted with 2.0% VMDMO | 48 | |
| LDPE grafted with 2.0% MEMO | 53 | |
| EBA grafted with 2.0% VTMO | 99 | |
| HDPE grafted with 2.0% VTMO | 100 | |
| LLDPE grafted with 2.0% VTMO | 118 | |
| VLDPE grafted with 2.0% VTMO | 69 | |
| E - VTMO | 57 | |
| E - MEMO | 35 | |
| E - BA - VTMO | 114 | 36 |
| LDPE grafted with 2.0% VTMO + 0.2% DOTDL | | 15 |
| E - BA - VTMO + 0.2% DOTDL | | 23 |
| E - BA - AA | 111 | 0 |

The above results reveal that silane-containing polyolefins display improved adhesion to epoxy at concentrations upwards from 0.1%. Hydrolysable silanes other than VTMO also act in a similar manner. They also reveal that hydrolysable silanes improve the adhesion to epoxy independent of how the silane-containing polyolefin has been prepared. The silane may be copolymerized, grafted it or added in another way. It is also possible to use polyolefins other than LDPE and ethylene copolymers produced by high-pressure polymerization. Furthermore, it is seen than silane-containing polyolefins may also be used to improve the adhesion to epoxy in liquid form.

On the basis of the above description, the following, non-restrictive claims are made.

## Claims

1. A steel tube or an epoxy layer coated steel tube, further coated with inner and outer polyolefin layers, whereby the inner layer is between the steel tube and the outer layer, characterized in that the outer polyolefin layer comprises a polyolefin compound containing carbon black and the inner polyolefin layer consists of a polyolefin which has been grafted or polymerised with 0.1-5 wt.% of a hyrolyzable silane, which, under the influence of water, forms silanol groups.

2. A steel tube according to claim 1 characterized in that said polyolefin grafted or copolymerised with hydrolysable silane is polyethylene, polypropylene or ethylene copolymer, in which the comonomer is selected from vinyl acetate, butylacrylate, ethylacrylate or methylacrylate.

3. A steel tube according to claim 1 or claim 2, characterized in that a silanol condensation catalyst is added to the outer polyolefin compound before the coating process and that it diffuses from the outer layer of the coating into the polyolefin layer modified with hydrolysable silane, which is thereby cross-linked.

4. A steel tube according to any of claims 1-3, characterized in that the polyolefin layer has been coextruded or tandem-extruded with a crosshead die or by spiral coating, or coating has been accomplished with powder spray and that coating of the polyolefin layer may take place in tandem with the epoxy coating or in a separate subsequent process.

5. A steel tube according to any of claims 1-5, characterized in that the polyolefin layer modified with hydrolysable silane has been rapidly cross-linked by treatment in hot water or steam.

## Patentansprüche

1. Stahlrohr oder ein mit einer Epoxidschicht beschichtetes Stahlrohr, das ferner mit inneren und äußeren Polyolefinschichten beschichtet ist, wobei die innere Schicht zwischen dem Stahlrohr und der äußeren Schicht angeordnet ist,
**dadurch gekennzeichnet, daß**
die äußere Polyolefinschicht eine Polyolefinverbindung umfaßt, die Ruß enthält, und die innere Polyolefinschicht aus einem Polyolefin besteht, dem 0,1 - 5 Gew.-% eines hydrolysierbaren Silans aufgepfropft wurden, oder das mit diesem hydolysierbaren Silan polymerisiert wurde, das unter der Einwirkung von Wasser Silanolgruppen bildet.

2. Stahlrohr nach Anspruch 1,
**dadurch gekennzeichnet, daß**
das Polyolefin, auf das hydrolysierbares Silan aufgepfropft oder das mit hydrolysierbarem Silan copolymerisiert wurde, Polyethylen, Polypropylen oder ein Ethylencopolymer ist, bei dem das Comonomer aus Vinylacetat, Butylacrylat, Ethylacrylat oder Methylacrylat ausgewählt ist.

3. Stahlrohr nach Anspruch 1 oder Anspruch 2,
**dadurch gekennzeichnet, daß**
ein Silanol-Kondensationskatalysator vor dem Beschichtungsverfahren zu der äußeren Polyolefinverbindung gegeben wird, und daß er von der äußeren Schicht der Beschichtung in die mit dem hydrolysierbaren Silan modifizierte Polyolefinschicht diffundiert, die dadurch vernetzt wird.

4. Stahlrohr nach einem der Ansprüche 1 bis 3,
**dadurch gekennzeichnet, daß**
die Polyolefinschicht mit einem Querspritzkopf oder mittels Spiralbeschichtung coextrudiert oder tandem-extrudiert worden ist, oder daß die Beschichtung mit einem Pulverspray erfolgte, und daß die Epoxidbeschichtung und das Aufbringen der Polyolefinschicht hintereinander oder in einem getrennten, nachfolgenden Verfahren erfolgen kann.

5. Stahlrohr nach einem der Ansprüche 1 bis 5,
**dadurch gekennzeichnet, daß**
die mit dem hydrolysierbaren Silan modifizierte Polyolefinschicht durch Behandlung in heißem Wasser oder Dampf rasch vernetzt worden ist.

## Revendications

1. Tube en acier ou tube en acier revêtu d'une couche d'époxy, revêtu en outre de couches polyoléfiniques interne et externe, la couche interne se trouvant entre le tube d'acier et la couche externe, caractérisé en ce que la couche polyoléfinique externe comprend une polyoléfine contenant du noir de carbone et en ce que la couche polyoléfinique interne est constituée d'une polyoléfine qui a été greffée ou polymérisée avec 0,1 à 5 % en masse d'un silane hydrolysable qui, sous l'influence de l'eau, forme des groupes silanol.

2. Tube en acier selon la revendication 1, caractérisé en ce que ladite polyoléfine greffée ou copolymérisée avec un silane hydrolysable est un polyéthylène, un polypropylène ou un copolymère d'éthylène dans lequel le comonomère est choisi parmi l'acétate de vinyle, l'acrylate de butyle, l'acrylate d'éthyle ou l'acrylate de méthyle.

3. Tube en acier selon la revendication 1 ou la revendication 2, caractérisé en ce qu'un catalyseur de condensation du silanol est ajouté à la polyoléfine externe avant l'opération de revêtement et en ce qu'il diffuse à partir de la couche externe du revêtement dans la couche de polyoléfine modifiée avec un silane hydrolysable, qui est ainsi réticulée.

4. Tube en acier selon l'une quelconque des revendications 1 à 3, caractérisé en ce que la couche de polyoléfine a été co-extrudée ou extrudée en tandem à l'aide d'une filière à tête transversale ou par revêtement en spirale, ou le revêtement a été effectué par projection d'une poudre, et en ce que l'application de la couche de polyoléfine peut s'effectuer en tandem avec l'application de l'époxy ou dans une opération séparée ultérieure.

5. Tube en acier selon l'une quelconque des revendications 1 à 4, caractérisé en ce que la couche de polyoléfine modifiée avec un silane hydrolysable a été rapidement réticulée par traitement à l'eau chaude ou à la vapeur.
